(19) Europäisches Patentamt
European Patent Office
Office européen des brevets

(11) EP 0 707 028 B1

(12) EUROPÄISCHE PATENTSCHRIFT

(45) Veröffentlichungstag und Bekanntmachung des Hinweises auf die Patenterteilung:
**27.08.1997 Patentblatt 1997/35**

(51) Int Cl.[6]: **C08G 77/02**, C08G 77/06, C08J 3/09, C08G 77/20, C08G 77/22

(21) Anmeldenummer: **95116087.8**

(22) Anmeldetag: **12.10.1995**

(54) **Organopolysiloxanharzlösungen, Verfahren zu deren Herstellung sowie deren Verwendung in Beschichtungsmassen**

Solutions of organopolysiloxanes, process for their preparation and their use in coating compositions

Solutions d'organopolysiloxanes, procédé pour leur préparation et leur utilisation comme compositions de revêtement

(84) Benannte Vertragsstaaten:
**AT BE CH DE ES FR GB IT LI NL SE**

(30) Priorität: **14.10.1994 DE 4436817**

(43) Veröffentlichungstag der Anmeldung:
**17.04.1996 Patentblatt 1996/16**

(73) Patentinhaber: **Wacker-Chemie GmbH**
**81737 München (DE)**

(72) Erfinder:
- **Weidner, Richard, Dr.**
  **D-84489 Burghausen (DE)**
- **Hockemeyer, Friedrich**
  **D-84533 Martl (DE)**
- **Frey, Volker, Dr.**
  **D-84489 Burghausen (DE)**
- **Müller, Reinhardt, Dr.**
  **D-84489 Burghausen (DE)**
- **Jahn, Hartmut**
  **D-84489 Burghausen (DE)**

(74) Vertreter: **Budczinski, Angelika et al**
**c/o Wacker-Chemie GmbH,**
**Hanns-Seidel-Platz 4**
**81737 München (DE)**

(56) Entgegenhaltungen:
**EP-A- 0 108 208** **EP-A- 0 216 376**
**EP-A- 0 535 687** **EP-A- 0 555 050**
**EP-A- 0 640 664** **DE-A- 4 216 139**

EP 0 707 028 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Organopolysiloxanharzlösungen, die frei von aromatischen Kohlenwasserstoffen sind und 1-Alkene enthalten, Verfahren zu deren Herstellung sowie deren Verwendung in Beschichtungsmassen.

Organopolysiloxanharze sowie Verfahren zu der Herstellung von Organopolysiloxanharz sind vielfach bekannt. Beispielsweise wird in EP 195 936 A (Toray Silicone Co., Ltd.; ausgegeben am 1. Oktober 1986) ein Verfahren zur Herstellung von sogenannten MQ-Harzen durch Hydrolyse von Alkylsilikat mit einem monofunktionellen Silan beschrieben, wobei das Reaktionsgemisch mindestens 5 Gewichtsprozent Hydrogenchlorid enthält und das Alkylsilikat als letzte Komponente langsam zugetropft wird. Des weiteren beschreibt DE 42 16 139 A (Wacker-Chemie GmbH; ausgegeben am 18. November 1993) ein Verfahren zur Herstellung von Organopolysiloxanharz durch saure Hydrolyse von Silanen bzw. deren teilweiser Hydrolysate und basischer Nachbehandlung in Anwesenheit von wasserunlöslichem organischen Lösungsmittel, insbesondere Toluol, welches bei der gleichzeitigen destillativen Entfernung von Wasser und Alkohol als sogenannter Schlepper wirkt. Die Entfernung von Wasser und Alkohol ist insbesondere zur Herstellung von Siliconharz mit einem niedrigen Gehalt an Si-gebundenen Hydroxy- und Alkoxygruppen wichtig.

Beschichtungsmassen, die aliphatisch ungesättigte Kohlenwasserstoffe enthalten, sind ebenfalls bereits bekannt. So werden beispielsweise in EP 108 208 B1 (General Electric Co.; ausgegeben am 27. April 1988) und EP 216 376 A1 (General Electric Co.; ausgegeben am 1. April 1987) Trennbeschichtungsmassen für den Selbstklebesektor beschrieben, die unter anderem reaktive, niedrigviskose Verdünnungsmittel, wie α-Olefine, enthalten. Die vernetzung der Beschichtungsmittel erfolgt dabei in erster Linie über eine Platin-katalysierte Additionsreaktion. Das reaktive Verdünnungsmittel wird über ein sogenanntes Trennadditiv in das Beschichtungssystem eingebracht. Bei diesen Trennadditiven, mit denen die Trenneigenschaften des Beschichtungssystems eingestellt werden können, handelt es sich um Siliconharze, im wesentlichen MQ-Harze, in dem entsprechenden, reaktiven Verdünnungsmittel, die dadurch hergestellt werden, daß eine toluolische bzw. xylolische Siliconharzlösung mit dem reaktiven höhersiedenden Verdünnungsmittel gemischt und das aromatische Lösungsmittel dann durch Destillation bei möglichst niedrigen Temperaturen entfernt wird. Solche Beschichtungsmassen enthalten in der Regel noch aromatisches Lösungsmittel, was unter anderem zu Emissionen bei der Verarbeitung führt.

Gegenstand der Erfindung sind Organopolysiloxanharzlösungen, die 1-Alkene mit 10 bis 14 Kohlenstoffatomen enthalten und frei sind von anderen Kohlenwasserstoffen als 1-Alkene mit 10-14 Kohlenstoffatomen.

Unter dem Begriff Organopolysiloxane sollen im Rahmen dieser Erfindung auch oligomere Siloxane verstanden werden.

Die erfindungsgemäßen Organopolysiloxanharzlösungen haben einen Gehalt an Organopolysiloxanharz von vorzugsweise 50 bis 90 Gewichtsprozent, besonders bevorzugt 60 bis 85 Gewichtsprozent.

Die erfindungsgemäßen Organopolysiloxanharzlösungen haben bei 25°C eine Viskosität von vorzugsweise 3 bis 10 000 $mm^2/s$, besonders bevorzugt 50 bis 3 000 $mm^2/s$.

Ein weiterer Gegenstand der vorliegenden Erfindung ist ein Verfahren zur Herstellung von Organopolysiloxanharzlösungen, die frei sind von aromatischen Kohlenwasserstoffen, dadurch gekennzeichnet, daß

in einer 1. Stufe
mindestens ein Silan der Formel

$$R_3SiOR^1 \qquad (I)$$

und/oder dessen Hydrolysat $R_3SiOSiR_3$, wobei

- $R$ gleich oder verschieden sein kann und einen einwertigen organischen Rest bedeutet und
- $R^1$ einen Alkylrest bedeutet,

und mindestens ein Silan der Formel

$$Si(OR^2)_4 \qquad (II)$$

und/oder dessen Teilhydrolysat, wobei

- $R^2$ gleich oder verschieden sein kann und Alkylrest bedeutet,

sowie gegebenenfalls Organosiliciumverbindung, ausgewählt aus der Gruppe bestehend aus Silanen der Formel

$$R^3{}_aSi(OR^4)_{4-a} \qquad (III)$$

und/oder deren Teilhydrolysate, wobei

a 1 oder 2 ist,
$R^3$ gleich oder verschieden sein kann und einen einwertigen organischen Rest bedeutet und
$R^4$ gleich oder verschieden sein kann und Alkylrest bedeutet, und

Organopolysiloxane der Formel

$$(R^5{}_2SiO)_b \qquad (IV),$$

wobei

$R^5$ gleich oder verschieden sein kann und einen einwertigen organischen Rest bedeutet und
b eine ganze Zahl im Wert von 3 bis 8, vorzugsweise 4 oder 5, ist,

sowie deren Gemische,
mit Wasser in Gegenwart von Säure umgesetzt wird, wobei der entstandene Alkohol zumindest zum Teil abdestilliert wird,

in einer 2. Stufe
die in der 1. Stufe erhaltene homogene Reaktionsmasse in Anwesenheit von Base sowie mindestens einer solchen Menge an endständig ungesättigtem aliphatischen Kohlenwasserstoff, die zur Erhaltung einer homogenen Reaktionsmasse ausreicht, umgesetzt wird und Wasser sowie Alkohol destillativ entfernt werden,

in einer 3. Stufe
die in der 2. Stufe erhaltene homogene Reaktionsmasse mit Säure neutralisiert wird, gegebenenfalls endständig ungesättigter aliphatischer Kohlenwasserstoff teilweise sowie gegebenenfalls noch vorhandenes Wasser und Alkohol vollständig abdestilliert wird und das aus der Neutralisation entstandene, ausgefallene Salz entfernt wird sowie

gegebenenfalls in einer 4. Stufe
die in der 3. Stufe erhaltene homogene Reaktionsmasse teilweise von endständig ungesättigtem aliphatischen Kohlenwasserstoff befreit wird.

Bei den Resten R, $R^3$ und $R^5$ handelt es sich jeweils unabhängig voneinander vorzugsweise um einwertige Kohlenwasserstoffreste mit 1 bis 18 Kohlenstoffatomen.

Beispiele für die Reste R, $R^3$ und $R^5$ sind jeweils unabhängig voneinander Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste als Rest R, $R^3$ oder $R^5$ sind jeweils unabhängig voneinander halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Acyloxyalkylreste, wie der 3-Acryloxypropyl- und 3-Methacryloxypropylrest; Hydroxyalkylreste, wie der Hydroxypropylrest, und Reste der Formel

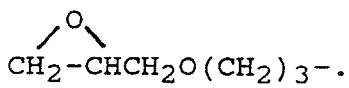

Bei den Resten R, $R^3$ und $R^5$ handelt es sich jeweils unabhängig voneinander besonders bevorzugt um den Methyl- und Vinylrest.

Beispiele für die Reste $R^1$, $R^2$ und $R^4$ sind die für Rest R, $R^3$ und $R^5$ angegebenen Beispiele für Alkylreste.

Bei den Resten $R^1$, $R^2$ und $R^4$ handelt es sich jeweils unabhängig voneinander bevorzugt um Alkylgruppen mit 1 bis 4 Kohlenstoffatomen.

Bei den Resten $R^1$, $R^2$ und $R^4$ handelt es sich jeweils unabhängig voneinander besonders bevorzugt um den Methyl- und Ethylrest.

Vorzugsweise werden bei dem erfindungsgemäßen Verfahren Silane der Formeln (I), (II) und gegebenenfalls (III) bzw. deren (Teil-)Hydrolysate eingesetzt, in denen $R^1$, $R^2$ sowie $R^4$ die gleiche Bedeutung haben.

Falls bei dem erfindungsgemäßen Verfahren Teilhydrolysate von Silanen der allgemeinen Formel (II) und (III) eingesetzt werden, sind jeweils solche mit bis zu 15 Siliciumatomen bevorzugt.

Beispiele für die im erfindungsgemäßen Verfahren eingesetzten Silane der Formel (I) bzw. deren Hydrolysate, also Disiloxane, sind Trimethylethoxysilan, Vinyldimethylethoxysilan, Hexamethyldisiloxan, 1,3-Diphenyltetramethyldisiloxan, 1,3-Bis(allyl)tetramethyldisiloxan, 1,3-Divinyltetramethylsiloxan, wobei Hexamethyldisiloxan und 1,3-Divinyltetramethylsiloxan besonders bevorzugt sind.

Beispiele für die im erfindungsgemäßen Verfahren eingesetzten Silane der Formel (II) sind Tetramethoxysilan, Tetraethoxysilan und Tetra-n-propoxysilan, wobei Tetraethoxysilan und dessen Teilhydrolysat besonders bevorzugt ist.

Beispiele für die im erfindungsgemäßen Verfahren gegebenenfalls eingesetzten Silane der Formel (III) sind Methyltrimethoxysilan, Vinyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, Vinyltriethoxysilan, 3-Chlorpropyltriethoxysilan, Phenyltriethoxysilan, o,m,p-Tolyltriethoxysilan, Propyltrimethoxysilan, Dimethyldiethoxysilan und Dimethyldimethoxysilan, wobei Methyltrimethoxysilan, Methyltriethoxysilan, Phenyltriethoxysilan, o,m,p-Tolyltriethoxysilan und Propyltriethoxysilan bevorzugt eingesetzt werden.

Beispiele für die im erfindungsgemäßen Verfahren gegebenenfalls eingesetzten Organopolysiloxane der Formel (IV) sind Hexamethylcyclotrisiloxan, Octamethylcyclotetrasiloxan, Dekamethylcyclopentasiloxan, wobei Octamethylcyclotetrasiloxan und Dekamethylcyclopentasiloxan bevorzugt sind.

Falls Silan der Formel (III) bzw. dessen Teilhydrolysat und/oder Organopolysiloxan der Formel (IV) eingesetzt wird, werden diese in Mengen von vorzugsweise bis zu 15 Gewichtsprozent, bezogen auf das Gesamtgewicht der Siliciumverbindungen eingesetzt.

Der Einsatz von Silan der Formel (III) bzw. dessen Teilhydrolysat sowie Organopolysiloxan der Formel (IV) ist bei dem erfindungsgemäßen Verfahren nicht bevorzugt.

In der 1. Stufe des erfindungsgemäßen Verfahrens wird vorzugsweise ein Gemisch aus Silanen der Formel (I) und/oder dessen Hydrolysat, insbesondere solches mit R gleich Methyl- oder Vinylrest, und Silan der Formel (II) und/oder dessen Hydrolysat im Molverhältnis, bezogen auf Si-Einheiten, von bevorzugt 0,4:1 bis 2,0:1, besonders bevorzugt 0,5:1 bis 1,5:1, eingesetzt, wobei $R^1$ in Formel (I) die gleiche Bedeutung hat wie $R^2$ in Formel (II).

Bei dem erfindungsgemäßen Verfahren wird in der 1. Stufe zu einem Gemisch aus Silan der Formel (I) und/oder dessen Hydrolysat, Silan der Formel (II) und/oder dessen Teilhydrolysat sowie gegebenfalls Organosiliciumverbindung der Formel (III) und/oder dessen Teilhydrolysat oder (IV) Wasser und Säure gegeben und vermischt.

Bei der 1. Stufe des erfindungsgemäßen Verfahrens wird dabei Wasser in Mengen von vorzugsweise 5 bis 30 Gewichtsprozent, besonders bevorzugt 5 bis 20 Gewichtsprozent, insbesondere 8 bis 18 Gewichtsprozent, jeweils bezogen auf das Gesamtgewicht der Reaktionsmasse der 1. Stufe vor der Destillation, eingesetzt.

Bei den in der 1. Stufe des erfindungsgemäßen Verfahrens eingesetzten Säuren kann es sich um die gleichen Säuren handeln, die auch bisher zur Hydrolyse von Silanen mit Alkoxygruppen verwendet wurden. Beispiele für derartige Säuren sind anorganische Säuren, wie HCl, $HClO_4$, $H_2SO_4$ und $H_3PO_4$, organische Säuren, wie Essigsäure, Ameisensäure, Propionsäure, Methansulfonsäure, Trifluormethansulfonsäure, wobei HCl bevorzugt eingesetzt wird.

Zur Erzielung einer homogenen Reaktionsmasse wird in der 1. Stufe des erfindungsgemäßen Verfahrens Säure vorzugsweise in Mengen von 0,2 bis 50 mmol, besonders bevorzugt 2,5 bis 15 mmol, jeweils bezogen auf 1000 g der Reaktionsmasse der 1. Stufe vor der Destillation, eingesetzt. Bei höheren Säurekonzentrationen wird im allgemeinen keine Homogenität der Reaktionsmasse erzielt. Beispielsweise hat sich bei der Verwendung der besonders bevorzugten HCl als Säure ein Konzentrationsbereich von 100 bis 500 ppm, bezogen auf das Gesamtgewicht der Reaktionsmasse der 1. Stufe vor der Destillation, als vorteilhaft herausgestellt.

Der bei der Hydrolyse in der 1. Stufe des erfindungsgemäßen Verfahrens entstehende Alkohol wird während oder nach, insbesondere nach, der Hydrolyse ganz oder teilweise entfernt. Je nach Art des Alkohols bzw. der Einsatzmenge

an Wasser kann das Destillat gewisse Mengen Wasser enthalten. Vorzugsweise wird der Alkohol nach der Hydrolyse in dem Maße abdestilliert, daß die Reaktionsmasse homogen bleibt.

Besonders bevorzugt werden 50 bis 90 Gewichtsprozent Alkohol, bezogen auf das Gesamtgewicht an entstandenem Alkohol, destillativ entfernt.

Die 1. Stufe des erfindungsgemäßen Verfahrens wird vorzugsweise bei einer Temperatur von 20°C bis zur Siedetemperatur der Reaktionsmasse, besonders bevorzugt von 50°C bis zur Siedetemperatur der Reaktionsmasse, und einem Druck zwischen bevorzugt 900 und 1100 hPa durchgeführt.

Die 1. Stufe des erfindungsgemäßen Verfahrens ist nach vorzugsweise 30 Minuten bis 5 Stunden, besonders bevorzugt 1 bis 3 Stunden, abgeschlossen.

Nach Beendigung der 1. Stufe des erfindungsgemäßen Verfahrens wird Base in mindestens einer solchen Menge, die zur Erreichung einer basischen Reaktionsmasse notwendig ist, gegebenenfalls weitere Stoffe sowie endständig ungesättigter aliphatischer Kohlenwasserstoff zugegeben. Es handelt sich dabei je nach eingesetzter Base im allgemeinen um Basenmengen im Bereich von 0,02 bis 2,0 Gewichtsprozent, bezogen auf das Gesamtgewicht der Reaktionsmasse der 2. Stufe vor der Destillation.

Vorzugsweise wird in der 2. Stufe soviel Base zugegeben, daß der pH-Wert im Bereich von 8,0 bis 14,0, bevorzugt von 9,0 bis 12,0, liegt.

Als Basen können in der 2. Stufe des erfindungsgemäßen Verfahrens alle Basen eingesetzt werden, die auch bisher als Katalysatoren bei Kondensationsreaktionen eingesetzt wurden.

Beispiele für solche Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, Ammoniumverbindungen, wie etwa Tetramethylammoniumhydroxid und Tetra-n-butylammoniumhydroxid, wobei Natriumhydroxid, Kaliumhydroxid, Methylamin, Ethylamin und Diethylamin bevorzugt und Natriumhydroxid, Kaliumhydroxid und Methylamin besonders bevorzugt sind.

Bevorzugt handelt es sich bei den erfindungsgemäß eingesetzten, endständig ungesättigten aliphatischen Kohlenwasserstoffen um 1-Alkene mit 10 bis 18 Kohlenstoffatomen, wie beispielsweise 1-Decen, 1-Dodecen, 1-Tetradecen und 1-Hexadecen, wobei 1-Alkene mit 10 bis 14 Kohlenstoffatomen, insbesondere 1-Dodecen und 1-Tetradecen, besonders bevorzugt sind.

Der in der 2. Stufe des erfindungsgemäßen Verfahrens eingesetzte endständig ungesättigte aliphatische Kohlenwasserstoff wird mindestens in einer solchen Menge verwendet, die zur Erhaltung einer homogenen Reaktionsmasse ausreicht. Es handelt sich dabei bevorzugt um Mengen von bis zu 50 Gewichtsprozent, besonders bevorzugt bis zu 40 Gewichtsprozent endständig ungesättigten aliphatischen Kohlenwasserstoff, jeweils bezogen auf das Gesamtgewicht der Reaktionsmasse der 2. Stufe vor der Destillation. Insbesondere werden soviel Volumenteile an endständig ungesättigtem aliphatischem Kohlenwasserstoff zugegeben, wie Alkohol und gegebenenfalls Wasser in der 1. Stufe abdestilliert wurde.

Bei der in der 2. Stufe des erfindungsgemäßen Verfahrens durchgeführten Destillation werden das in der Reaktionsmischung enthaltene Wasser sowie der restliche Alkohol vollständig bzw. nahezu vollständig abdestilliert, wobei gegebenenfalls geringe Mengen an endständig ungesättigtem aliphatischen Kohlenwasserstoff mit abdestilliert werden.

Mit der in der 2. Stufe des erfindungsgemäßen Verfahrens durchgeführten Destillation wird vorteilhafterweise sofort nach der Basenzugabe begonnen. Die Destillation ist zur Erzielung eines von Alkoxy- und/oder Hydroxygruppen freien Organopolysiloxanharzes bzw. eines Organopolysiloxanharzes mit einem niedrigen Alkoxy- und/oder Hydroxygehalt notwendig.

Bei der Basenzugabe in der 2. Stufe zu der sauren Reaktionsmasse der 1. Stufe wird in geringen Mengen ein Salz gebildet, welches nach der Destillation in der 2. Stufe ausfallen kann. Im Rahmen der vorliegenden Erfindung soll jedoch das gegebenenfalls ausgefallene Salz im Hinblick auf den Begriff der homogenen Reaktionsmasse in der 2. Stufe unberücksichtigt bleiben.

Die 2. Stufe des erfindungsgemäßen Verfahrens wird bevorzugt bei der Siedetemperatur der Reaktionsmasse und einem Druck zwischen 900 und 1100 hPa durchgeführt.

Die 2. Stufe des erfindungsgemäßen Verfahrens ist nach vorzugsweise 0,5 bis 5 Stunden, besonders bevorzugt 1 bis 3 Stunden, abgeschlossen.

Nach Beendigung der 2. Stufe des erfindungsgemäßen Verfahrens wird die homogene Reaktionsmischung in einer 3. Stufe mit Säure neutralisiert, gegebenenfalls noch vorhandenes Wasser und Alkohol vollständig abdestilliert und das ausgefallene Salz entfernt. In dieser Verfahrensstufe kann auch, falls erwünscht, endständig ungesättigter aliphatischer Kohlenwasserstoff teilweise abdestilliert werden. Die Destillation in der 3. Stufe des erfindungsgemäßen Verfahrens wird vorzugsweise bei einem Druck von 5 bis 1100 hPa und einer Temperatur von 80 bis 180°C durchgeführt.

Zur Neutralisation sind als Säure alle in der 1. Stufe genannten Säuren geeignet, wobei vorzugsweise die gleiche Säure wie in der 1. Stufe verwendet wird.

Falls zur Neutralisation in der 3. Stufe des erfindungsgemäßen Verfahrens mit Wasser verdünnte Säuren verwendet werden und/oder die Destillation in der 2. Stufe nicht vollständig war, muß in der 3. Stufe Wasser abdestilliert werden, wobei nach der Destillation das in der Reaktionsmasse vorhandene Salz vollständig ausfällt.

Das ausgefallene Salz wird dann vorzugsweise durch Filtration von der Reaktionsmischung entfernt.

Nach Beendigung der 3. Stufe des erfindungsgemäßen Verfahrens kann gegebenenfalls in einer 4. Stufe die erhaltene homogene Reaktionsmasse teilweise von endständig ungesättigtem aliphatischen Kohlenwasserstoff, vorzugsweise durch Destillation, befreit werden, wobei die Destillation vorzugsweise bei einem Druck von 5 bis 1100 hPa und einer Temperatur von 100 bis 180°C durchgeführt wird.

Nach einer bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe
mit Wasser und 0,2 bis 50 mmol Säure, bezogen auf 1000 g der Reaktionsmasse der 1. Stufe vor der Destillation, vermischt, bei der Siedetemperatur der Reaktionsmasse und einem Druck zwischen 900 und 1100 hPa umgesetzt und entstandener Ethanol abdestilliert,
in einer 2. Stufe
die in der 1. Stufe erhaltene homogene Reaktionsmasse in Anwesenheit von Base, ausgewählt aus Natriumhydroxid, Kaliumhydroxid und Ethylamin, und einem endständig ungesättigten aliphatischen Kohlenwasserstoff, insbesondere einem 1-Alken mit 10 bis 18 Kohlenstoffatomen, bei der Siedetemperatur der Reaktionsmasse und einem Druck zwischen 900 und 1100 hPa umgesetzt, wobei Wasser sowie Ethanol vollständig bzw. nahezu vollständig abdestilliert wird,
in einer 3. Stufe
die in der 2. Stufe erhaltene homogene Reaktionsmasse mit Säure neutralisiert, gegebenenfalls Wasser und Ethanol vollständig und gegebenenfalls endständig ungesättigter aliphatischer Kohlenwasserstoff teilweise abdestilliert sowie das bei der Neutralisation entstandene, ausgefallene Salz abfiltriert sowie gegebenenfalls
in einer 4. Stufe
die in der 3. Stufe erhaltene Reaktionsmasse teilweise von endständig ungesättigtem aliphatischen Kohlenwasserstoff durch Destillation befreit.

Nach einer besonders bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe
mit Wasser und 100 bis 500 ppm HCl, bezogen auf das Gesamtgewicht der Reaktionsmasse der 1. Stufe vor der Destillation, vermischt, bei der Siedetemperatur der Reaktionsmasse und einem Druck zwischen 900 und 1100 hPa umgesetzt und ca. 70 Gewichtsprozent des entstandenen Ethanols, bezogen auf die Gesamtmenge des entstandenen Ethanols, abdestilliert,
in einer 2. Stufe
die in der 1. Stufe erhaltene homogene Reaktionsmasse in Anwesenheit von Base, ausgewählt aus Natriumhydroxid, Kaliumhydroxid und Methylamin, und 1-Alken mit 10 bis 18 Kohlenstoffatomen, insbesondere 1-Dodecen oder 1-Tetradecen, bei der Siedetemperatur der Reaktionsmasse und einem Druck zwischen 900 und 1100 hPa umgesetzt, wobei Wasser sowie Ethanol vollständig bzw. nahezu vollständig abdestilliert,
in einer 3. Stufe
die in der 2. Stufe erhaltene homogene Reaktionsmasse mit HCl neutralisiert, Wasser und gegebenenfalls Ethanol vollständig und gegebenenfalls 1-Alken teilweise abdestilliert und das bei der Neutralisation entstandene, ausgefallene Salz abfiltriert sowie
gegebenenfalls in einer 4. Stufe
die in der 3. Stufe erhaltene Reaktionsmasse teilweise von endständig ungesättigtem aliphatischen Kohlenwasserstoff durch Destillation befreit.

Die erfindungsgemäß hergestellten Harzlösungen haben einen Gehalt an Organopolysiloxanharz von vorzugsweise 50 bis 90 Gewichtsprozent, besonders bevorzugt 60 bis 85 Gewichtsprozent.

Das in den erfindungsgemäßen Organopolysiloxanharzlösungen enthaltene Organopolysiloxanharz hat ein durchschnittliches Molekulargewicht von vorzugsweise 500 bis 10 000 g/mol und weist durchschnittlich keine oder höchstens bis zu 6 Molprozent Alkoxygruppen, bezogen auf tetrafunktionelle Si-Einheiten ($SiO_{4/2}$), und keine oder höchstens 0,4 Gewichtsprozent Si-gebundene Hydroxygruppen, bezogen auf das Gesamtgewicht an Organopolysiloxanharz, auf.

Die erfindungsgemäßen Organopolysiloxanharzlösungen sowie das darin enthaltene Organopolysiloxanharz sind voll verträglich mit Organopolysiloxanen, wobei das Organopolysiloxanharz zumindest zum Teil, vorzugsweise jedoch ganz, in flüssigem Organopolysiloxan löslich ist.

Beispiele für die in den erfindungsgemäßen Organopolysiloxanharzlösungen enthaltenen Organopolysiloxanharze sind $[Me_3SiO_{1/2}]_x[SiO_{4/2}]_y$ mit Me gleich Methylrest und einem Verhältnis von x:y von 0,5 : 1 bis 1,5 : 1 sowie $[Me_3SiO_{1/2}]_x[Me_2ViSiO_{1/2}]_y[SiO_{4/2}]_z$ mit Me gleich Methylrest, Vi gleich Vinylrest und einem Verhältnis von (x+y):z von 0,5 : 1 bis 1,5 : 1 und einem Verhältnis von x:y von 98:2 bis 50:50.

Das erfindungsgemäße Verfahren hat den Vorteil, daß es sehr einfach in der Durchführung ist, sehr gut reproduzierbar ist und hohe Raum-Zeit-Ausbeuten liefert. Als großer Vorteil hat sich gezeigt, daß der erfindungsgemäß eingesetzte, endständig ungesättigte aliphatische Kohlenwasserstoff keinen chemischen Veränderungen, insbesondere keiner Isomerisierung und damit Wanderung der endständigen Kohlenstoff-Kohlenstoff-Doppelbindung, unterliegt, was zum Einsatz in Beschichtungsmitteln für den Selbstklebesektor (kurze Vernetzungszeiten) sehr wichtig ist, um reproduzierbare Trennwerte zu erzeugen. Der teilweise anfallende endständig ungesättigte aliphatische Kohlenwasserstoff kann in den Prozeß rückgeführt werden. Ein weiterer Vorteil besteht darin, daß bei dem erfindungsgemäßen Verfahren keine flüssig/flüssig-Phasentrennung durchgeführt wird und dadurch keine Ausbeuteverluste auftreten.

Die erfindungsgemäß hergestellten Organopolysiloxanharzlösungen haben den Vorteil, daß sie sehr stabil sind und über einen Zeitraum von mindestens einem Jahr bei 25°C und dem Druck der umgebenden Atmosphäre keine Viskositätsänderungen zeigen.

Aufgrund der homogenen Reaktionsführung und der niedrigen Säurekonzentrationen entsteht ein Harz mit einem nur geringen Anteil niedermolekularer Harzfraktionen, was sich bei einem Einsatz in Trennbeschichtungsmassen vorteilhaft auswirkt.

Nach dem erfindungsgemäßen Verfahren werden Organopolysiloxanharzlösungen mit einer großen Reinheit und keinen Si-gebundenen Alkoxy- und/oder Hydroxygruppen bzw. einem niedrigen Gehalt an Alkoxy- und/oder Hydroxygruppen erhalten, die eine hohe Lagerstabilität besitzen.

Die erfindungsgemäßen Organopolysiloxanharzlösungen eignen sich für alle Anwendungen, für die auch bisher Organopolysiloxanharze bzw. deren Lösungen eingesetzt werden konnten, insbesondere natürlich für Anwendungen, bei denen die Anwesenheit auch schon geringer Mengen von aromatischen Kohlenwasserstoffen, wie Toluol, unerwünscht ist.

Besonders bevorzugt finden die erfindungsgemäßen Organopolysiloxanharzlösungen Verwendung in durch Anlagerung von Sigebundenem Wasserstoff an aliphatische Kohlenstoff-Kohlenstoff-Doppelbindung vernetzbaren Organopolysiloxanzusammensetzungen, aus denen klebrige Stoffe abweisende Überzüge hergestellt werden können.

Ein weiterer Gegenstand der vorliegenden Erfindung sind vernetzbare Organopolysiloxanzusammensetzungen, die

(A) Organopolysiloxan mit SiC-gebundenen organischen Resten mit endständiger aliphatischer Kohlenstoff-Kohlenstoff-Doppelbindung,
(B) Si-gebundenen Wasserstoff aufweisendes Organopolysiloxan,
(C) erfindungsgemäße bzw. erfindungsgemäß hergestellte Organopolysiloxanharzlösung,
(D) Metallkomplex oder Metallverbindung der 8. Nebengruppe sowie gegebenenfalls
(E) die Anlagerung von Si-gebundenem Wasserstoff an aliphatische Doppelbindung verzögernde Verbindung

enthalten.

Die Komponenten (A), (B), (D) und (E) können die gleichen sein, die auch bisher in durch Anlagerung von Si-gebundenem Wasserstoff an aliphatische Kohlenstoff-Kohlenstoff-Doppelbindung vernetzbaren Massen eingesetzt werden konnten.

Vorzugsweise handelt es sich bei den Organopolysiloxanen (A) um solche aus Einheiten der Formel

$$R^6_eR^7_fSiO_{\frac{4-e-f}{2}} \qquad \text{(V),}$$

wobei

$R^6$ gleich oder verschieden sein kann und aliphatisch gesättigte, gegebenenfalls substituierte SiC-gebundene Kohlenwasserstoffreste mit 1 bis 18 Kohlenstoffatomen bedeutet,
$R^7$ gleich oder verschieden sein kann und SiC-gebundene organische Reste mit endständiger aliphatischer Kohlenstoff-Kohlenstoff-Doppelbindung bedeuten,
e 0, 1, 2 oder 3 ist und

f 0, 1, 2 oder 3 ist,

mit der Maßgabe, daß die Summe von e und f kleiner oder gleich 3 ist und Siloxan (A) pro Molekül durchschnittlich mindestens zwei Reste $R^7$ aufweist.

Obwohl durch Formel (V) nicht ausgedrückt, können bis zu 5 % der Reste $R^6$ im Organopolysiloxan (A) auch die Bedeutung von Alkoxyrest haben.

Vorzugsweise sind mindestens 90 % aller SiC-gebundenen Reste von Organopolysiloxan (A) Methylreste.

Beispiele für Reste $R^6$ sind die für R oben angegebenen Beispiele für aliphatisch gesättigte Reste.

Beispiele für Rest $R^7$ sind der Vinyl-, Allyl-, 3-Butenyl-, 5-Hexenyl-, 7-Octenyl- und 9-Decenylrest, wobei der Vinyl- und 5-Hexenylrest besonders bevorzugt sind.

Vorzugsweise enthält das erfindungsgemäß eingesetzte Organopolysiloxan (A) pro Molekül durchschnittlich zwei organische Reste mit endständiger aliphatischer Kohlenstoff-Kohlenstoff-Doppelbindung.

Besonders bevorzugt handelt es sich bei Siloxan (A) um Polydimethylsiloxane mit Dimethylvinylendgruppen.

Die erfindungsgemäß eingesetzten Organopolysiloxane (A) haben vorzugsweise bei 25°C eine Viskosität von 20 bis 5 000 $mm^2/s$.

Die erfindungsgemäß eingesetzten Organopolysiloxane (A) weisen vorzugsweise Jodzahlen zwischen 1 und 30, besonders bevorzugt 2 bis 20, auf, wobei die Jodzahl die bei der Addition an die Doppelbindung verbrauchte Jodmenge in Gramm pro 100 Gramm eingesetztes, zu untersuchendes Material angibt.

Bei den Organopolysiloxanen (B) kann es sich um bisher bekannte lineare, verzweigte oder cyclische Organopolysiloxane handeln, die Si-gebundenen Wasserstoff aufweisen.

Als Organopolysiloxane (B) werden vorzugsweise lineare, cyclische oder verzweigte Organopolysiloxane aus Einheiten der Formel

$$R^8_cH_dSiO_{\frac{4-c-d}{2}} \quad (VI)$$

eingesetzt, wobei

$R^8$ gleich oder verschieden sein kann und eine oben für $R^6$ angegebene Bedeutung hat,
c 0, 1, 2 oder 3 ist und
d 0, 1 oder 2 ist,

mit der Maßgabe, daß die Summe von c + d kleiner oder gleich 3 ist und durchschnittlich mindestens zwei Si-gebundene Wasserstoffatome je Molekül vorliegen.

Obwohl durch Formel (VI) nicht ausgedrückt, können bis zu 8 % der Reste $R^8$ im Organopolysiloxan (B) auch die Bedeutung von Alkoxyrest haben.

Die Organopolysiloxane (B) besitzen vorzugsweise eine durchschnittliche Viskosität von 5 bis 1 000 $mm^2/s$, besonders bevorzugt 10 bis 500 $mm^2/s$, bei 25°C.

Vorzugsweise sind mindestens 50 % aller SiC-gebundenen Reste von Organopolysiloxan (B) Methylreste.

Vorzugsweise enthält das erfindungsgemäß eingesetzte Organopolysiloxan (B) pro Molekül durchschnittlich mindestens 3 Si-gebundene Wasserstoffatome.

Vorzugsweise enthält das erfindungsgemäß eingesetzte Organopolysiloxan (B) Si-gebundenen Wasserstoff im Bereich von 0,1 bis 2 Gewichtsprozent, besonders bevorzugt 0,8 bis 1,7 Gewichtsprozent, bezogen auf das Gesamtgewicht des Organopolysiloxans (B).

Bei den erfindungsgemäßen Zusammensetzungen wird vorzugsweise Siloxan (B) in Mengen von 0,7 bis 5 Mol Si-gebundenen Wasserstoff, besonders bevorzugt 1,1 bis 3 Mol Si-gebundenen Wasserstoff, jeweils bezogen auf 1 Mol endständige aliphatische Kohlenstoff-Kohlenstoff-Doppelbindung von Siloxan (A), eingesetzt.

Die in den erfindungsgemäßen Zusammensetzungen als Komponente (C) eingesetzten Organopolysiloxanharzlösungen haben vorzugsweise einen Gehalt an Organopolysiloxanharz von 50 bis 90 Gewichtsprozent.

Bei den erfindungsgemäßen Zusammensetzungen wird Organopolysiloxanharzlösung (C) vorzugsweise in Mengen von 0,5 bis 95 Gewichtsprozent, besonders bevorzugt 1 bis 90 Gewichtsprozent, jeweils bezogen auf das Gesamtgewicht der erfindungsgemäßen Zusammensetzung, eingesetzt.

Über die Menge an Organopolysiloxanharz in Form der eingesetzten Komponente (C) können die Trenneigenschaften der vernetzbaren Zusammensetzung reguliert werden. So erhöhen sich mit zunehmender Menge an Organopolysiloxanharz die Trennwerte.

Als die Anlagerung von Si-gebundenem Wasserstoff an aliphatische Doppelbindung fördernder Katalysator (D) können die gleichen Katalysatoren verwendet werden, die auch bei den bisher bekannten Zusammensetzungen zum

Vernetzen von aliphatische Doppelbindungen enthaltenden Organopolysiloxanen mit Verbindungen, die Si-gebundenen Wasserstoff enthalten, zur Förderung der Vernetzung eingesetzt werden konnten. Es werden vorzugsweise Platinmetalle oder deren Verbindungen bzw. Komplexe, insbesondere Platinverbindungen bzw. -komplexe eingesetzt.

Beispiele für Katalysatoren (D) sind Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, insbesondere Platin-1,3-Divinyl-1,1,3,3-tetramethyldisiloxankomplexe, Bis-($\gamma$-picolin)-platindichlorid, Trimethylendipyridinplatindichlorid, Dicyclopentadienplatindichlorid, Dimethylsulfoxidethylenplatin-(II)-dichlorid, Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, Cyclooctadien-Platindichlorid und Norbornadien-Platindichlorid.

Bei den erfindungsgemäßen Zusammensetzungen wird Katalysator (D) vorzugsweise in Mengen von 10 bis 1 000 Gewichts-ppm (parts per million), besonders bevorzugt 50 bis 200 Gewichts-ppm, jeweils bezogen auf das Gesamtgewicht an erfindungsgemäßer Zusammensetzung und berechnet als elementares Platin, eingesetzt.

Beispiele für die die Anlagerung von Si-gebundenem Wasserstoff an aliphatische Mehrfachbindung verzögernden Mittel (E), den sogenannten Inhibitoren, sind Alkinole, Fumarsäure, Maleinsäure, Fumarsäure- und Maleinsäureester.

Bei den erfindungsgemäßen Zusammensetzungen wird Inhibitor (E) vorzugsweise in Mengen von 0,05 bis 2 Gewichtsprozent, besonders bevorzugt 0,1 bis 1,0 Gewichtsprozent, jeweils bezogen auf das Gesamtgewicht an erfindungsgemäßer Zusammensetzung, eingesetzt.

Des weiteren können die erfindungsgemäßen vernetzbaren Organopolysiloxanmassen übliche Zusatzstoffe enthalten.

Die erfindungsgemäßen vernetzbaren Organopolysiloxanmassen können nach bekannten Verfahren, wie einfaches Vermischen der einzelnen Bestandteile, hergestellt werden.

Vorteilhafterweise werden die erfindungsgemäßen Organopolysiloxanharzlösungen (C) im Gemisch mit Inhibitor (E) und gegebenfalls Organopolysiloxan als sogenanntes Trennadditiv eingesetzt.

Ein weiterer Gegenstand der vorliegenden Erfindung sind Trennadditive enthaltend erfindungsgemäße bzw. erfindungsgemäß hergestellte Organopolysiloxanharzlösung (C), die Anlagerung von Si-gebundenem Wasserstoff an aliphatische Doppelbindung verzögernde Verbindung (E) sowie gegebenenfalls Organopolysiloxan, ausgewählt aus Organopolysiloxan mit SiC-gebundenen organischen Resten mit endständiger aliphatischer Kohlenstoff-Kohlenstoff-Doppelbindung und Si-gebundenen Wasserstoff aufweisendes Organopolysiloxan.

Die erfindungsgemäßen Trennadditive enthalten Inhibitor (E) in Mengen von bevorzugt 0,1 bis 1,5 Gewichtsprozent, besonders bevorzugt 0,1 bis 1,0 Gewichtsprozent, jeweils bezogen auf das Gewicht der Harzlösung (C).

Falls die erfindungsgemäßen Trennadditive Organopolysiloxane enthalten, handelt es sich bevorzugt um Siloxane aus Einheiten der Formel (V) mit einer Viskosität von 30 bis 100 000 $mm^2/s$, wobei Polydimethylsiloxane mit endständigen Vinylgruppen im genannten Viskositätsbereich besonders bevorzugt sind.

Falls die erfindungsgemäßen Trennadditive Organopolysiloxane enthalten, handelt es sich bevorzugt um Mengen von 1 bis 40 Gewichtsprozent, besonders bevorzugt 2 bis 30 Gewichtsprozent, jeweils bezogen auf das Gewicht der Harzlösung (C).

Bevorzugt enthalten die erfindungsgemäßen Trennadditive zusätzlich zu Harzlösung (C), Inhibitor (E) und gegebenenfalls Organopolysiloxan keine weiteren Komponenten.

Die erfindungsgemäßen Trennadditive können nun auf bekannte Weise mit den anderen Komponenten (A), (B) und (D) zur Herstellung von vernetzbaren Organopolysiloxanzusammensetzungen, aus denen klebrige Stoffe abweisende Überzüge hergestellt werden können, vermischt werden.

Die erfindungsgemäßen vernetzbaren Organopolysiloxanmassen können für alle Zwecke eingesetzt werden, für die auch bisher additionsvernetzbare Organopolysiloxanmassen eingesetzt worden sind, wie beispielsweise zur Herstellung von Trennbeschichtungen gegenüber klebenden Artikeln. So eignen sie sich beispielsweise zum Herstellen von Trenn-, Abdeck- und Mitläuferpapieren einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck- und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z.B. Pappe, Kunststoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen

Selbstklebematerialien sowohl nach dem off-line Verfahren als auch nach dem in-line Verfahren.

Das Auftragen der erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 900 bis 1100 hPa fester Stoffe handeln. Beispiele für derartige Oberflächen sind diejenigen von Papier, Holz, Kork und Kunststoffolien, z.B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 $g/m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen vernetzbaren Organopolysiloxanmassen können auf bekannte Art und Weise vernetzen gelassen werden, wobei der endständig ungesättigte aliphatische Kohlenwasserstoff der erfindungsgemäß eingesetzten Komponente (C) bei der Vernetzung chemisch in die Siliconmatrix eingebaut wird.

Die Vernetzung der erfindungsgemäßen Zusammensetzungen erfolgt vorzugsweise bei 50°C bis 200°C, besonders bevorzugt 60 bis 150°C, und einem Druck von 900 bis 1100 hPa.

Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen haben den Vorteil, daß sie frei von aromatischen Kohlenwasserstoffen sind, wodurch unerwünschte Emissionen bei den obengenannten Anwendungen, insbesondere bei höheren Temperaturen, vermieden werden können. Des weiteren haben die erfindungsgemäßen Zusammensetzungen den Vorteil, das sie sehr stabil sind und Beschichtungen mit reproduzierbaren Trennwerten ergeben.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

**Beispiel 1**

Zu 1800 g Tetraethoxysilan mit einem 40 %igen $SiO_2$-Anteil (käuflich erhältlich unter der Bezeichnung TES 40 bei der Wacker-Chemie GmbH, München), 730 g Hexamethyldisiloxan und 116 g 1,3-Divinyltetramethyldisiloxan werden 420 g Wasser und 3,8 g 20 %ige Salzsäure gegeben und für eine Dauer von 2,5 Stunden bei einer Temperatur von 78°C unter Rückfluß erhitzt. Anschließend werden innerhalb von einer Stunde 970 g Destillat abgenommen. Das erhaltene Destillat enthält 10 % Wasser und 90 % Ethanol. Das homogene Reaktionsgemisch versetzt man dann mit 990 g 1-Dodecen (käuflich erhältlich bei Chevron Chemical Houston, Genf) und 8 g einer 25 %igen Lösung von NaOH in Wasser und destilliert 560 g flüchtige Bestandteile ab. Das erhaltene Destillat besteht zu 56 % aus Ethanol, zu 42 % aus Wasser und zu 2 % aus 1-Dodecen. Anschließend neutralisiert man das homogene Reaktionsgemisch mit 5 ml 20 %iger Salzsäure und destilliert 15 g flüchtige Bestandteile ab. Dieses Destillat enthält 61 % Ethanol, 27 % Wasser und 12 % 1-Dodecen. Das vollständig ausgefallene Natriumchlorid wird dann abfiltriert.

Die so erhaltene Harzlösung wird in einem weiteren Verfahrensschritt durch destillative Entfernung von 568 g flüchtigen Bestandteilen bei einer Temperatur von 130°C und einem Druck von 30 hPa aufkonzentriert. Das erhaltene Destillat besteht zu 1 % aus Ethanol und 99 % aus 1-Dodecen, das bei der Herstellung der Harzlösung wieder eingesetzt werden kann.

Es werden 1745 g einer Organopolysiloxanharzlösung mit einem Harzanteil von 78 % und einer Viskosität von 767 $mm^2/s$ erhalten. Nach einer Lagerung über einen Zeitraum von 2 Monaten bei 25°C ändert sich die Viskosität der Harzlösung nicht.

$^1$H-NMR-Messungen belegen, daß während der Harzherstellung keine Isomerisierung der endständigen Kohlenstoff-Kohlenstoff-Doppelbindung im 1-Dodecen auftritt. Es werden keine -CH=CH-Einheiten nachgewiesen.

Verdünnt man die erhaltene Harzlösung mit 1-Dodecen auf einen Harzgehalt von 50 %, so weist die resultierende Lösung eine Viskosität von 7,8 $mm^2/s$ und einen Gehalt an Si-gebundenen Hydroxylgruppen von 0,09 % und einen Restsäuregehalt von 3 ppm auf.

**Vergleichsbeispiel 1**

500 g einer gemäß der in Beispiel 3 der oben genannten Veröffentlichung DE 42 16 139 A beschriebenen Verfahrensweise mit den im erfindungsgemäßen Beispiel 1 angegebenen Mengenverhältnissen an Ausgangsstoffen hergestellten Lösung des MQ-Harzes aus $[Me_3SiO_{1/2}]$-, $[(CH_2=CH)Me_2SiO_{1/2}]$- und $[SiO_{4/2}]$-Einheiten mit Me gleich Methylrest in Toluol mit einem Festgehalt von 70 % werden mit 100 g 1-Dodecen vermischt und bei einer Temperatur von 75°C und einem Druck von 30 hPa 152 g flüchtige Bestandteile abdestilliert. Als Rückstand erhält man 448 g einer 78 %igen MQ-Harzlösung in 1-Dodecen mit einem Resttoluolgehalt von 0,9 % (ermittelt nach $^1$H-NMR-Messungen) und einer Viskosität von 721 $mm^2/s$.

**Beispiel 2**

Mit der in Beispiel 1 hergestellten 78 %igen Organopolysiloxanharzlösung wird eine Beschichtungsmasse durch Vermischen der folgenden Substanzen hergestellt:

| | |
|---|---|
| 70 Teile | 78 %ige Harzlösung gemäß Beispiel 1, |
| 20 Teile | eines $\alpha,\omega$-Dimethylvinylsiloxypolydimethylsiloxans mit einer Viskosität von 500 $mm^2/s$, |
| 10 Teile | eines $\alpha,\omega$-Dimethylvinylsiloxypolydimethylsiloxans mit einer Viskosität von 20 000 $mm^2/s$, |
| 5,3 Teile | eines $\alpha,\omega$-Trimethylsiloxypolymethylhydrogensiloxans mit einer Viskosität von 25 $mm^2/s$ und einem Gehalt an Si-gebundenem Wasserstoff von 1,62 %, |
| 0,25 Teile | Ethinylcyclohexanol sowie |

Platin in Form eines Platin-1,3-divinyl-1,1,3,3-tetramethyldisiloxan-Komplexes in einer solchen Menge, daß die gesamte Mischung einen Platingehalt von 100 ppm, bezogen auf elementares Platin, aufweist.

Die so zubereitete Mischung wird mit Hilfe eines metallischen Ziehstabes, einer sogenannten Handrakel, auf 65 $g/m^2$ schweres Pergaminpapier aufgezogen, so daß das Auftragsgewicht 1,5 $g/m^2$ beträgt.

Das so beschichtete Papier wird dann im Umluftschrank 12 Sekunden bei 150°C gehärtet. Jeweils ein Teil des beschichteten Papiers wird dann mit den Kautschukklebern der Bezeichnung "T-4154" und "K-7476" sowie Acrylkleber der Bezeichnung "A-7475" (jeweils käuflich erhältlich bei der Fa. Beiersdorf, D-Hamburg) abgedeckt. Die Laminate werden anschließend gemäß FINAT-Test Nr. 10 gealtert und geprüft. Die Ergebnisse finden sich in Tabelle 1.

Tabelle 1

| Kleber | "T-4154" | "K-7476" | "A-7475" |
|---|---|---|---|
| Trennwerte [cN/cm*] | 109 | 290 | 192 |

**Vergleichsbeispiel 2**

Die in Beispiel 2 beschriebene Arbeitsweise wird wiederholt mit der Abänderung, daß zur Herstellung der Beschichtungsmasse anstelle von 70 Teilen der 78 %igen Harzlösung gemäß Beispiel 1 70 Teile der 78 %igen Harzlösung gemäß Vergleichsbeispiel 1 eingesetzt werden. Die Ergebnisse finden sich in Tabelle 2.

Tabelle 2

| Kleber | "T-4154" | "K-7476" | "A-7475" |
|---|---|---|---|
| Trennwerte [cN/cm*] | 111 | 287 | 199 |

Bei der Aushärtung der Beschichtungsmasse entweicht Toluol.

**Beispiel 3**

Die gemäß Beispiel 1 hergestellte 78 %ige Harzlösung wird im Gewichtsverhältnis von 1:1 mit einem α,ω-Dimethylvinylsiloxypolydimethylsiloxan mit einer Viskosität von 500 $mm^2/s$ abgemischt. Auch nach mehrtägiger Lagerung bei 25°C und dem Druck der umgebenden Atmosphäre bleibt die Mischung völlig klar und homogen; Trübungen sind nicht festzustellen.

## Patentansprüche

1. Organopolysiloxanharzlösungen, die 1-Alkene mit 10 bis 14 Kohlenstoffatomen enthalten und frei sind von anderen Kohlenwasserstoffen als 1-Alkene mit 10 bis 14 Kohlenstoffatomen.

2. Verfahren zur Herstellung von Organopolysiloxanharzlösungen, die frei sind von aromatischen Kohlenwasserstoffen, dadurch gekennzeichnet, daß

in einer 1. Stufe
mindestens ein Silan der Formel

$$R_3SiOR^1 \qquad (I)$$

und/oder dessen Hydrolysat $R_3SiOSiR_3$, wobei

R gleich oder verschieden sein kann und einen einwertigen organischen Rest bedeutet und
$R^1$ einen Alkylrest bedeutet,

und mindestens ein Silan der Formel

$$Si(OR^2)_4 \qquad (II)$$

und/oder dessen Teilhydrolysat, wobei

$R^2$ gleich oder verschieden sein kann und Alkylrest bedeutet,

sowie gegebenenfalls Organosiliciumverbindung, ausgewählt aus der Gruppe bestehend aus Silanen der Formel

$$R^3{}_aSi(OR^4)_{4-a} \qquad (III)$$

und/oder deren Teilhydrolysate, wobei

a 1 oder 2 ist,
$R^3$ gleich oder verschieden sein kann und einen einwertigen organischen Rest bedeutet und
$R^4$ gleich oder verschieden sein kann und Alkylrest bedeutet, und

Organopolysiloxane der Formel

$$(R^5{}_2SiO)_b \qquad (IV),$$

wobei

$R^5$ gleich oder verschieden sein kann und einen einwertigen organischen Rest bedeutet und
b eine ganze Zahl im Wert von 3 bis 8 ist,

sowie deren Gemische,
mit Wasser in Gegenwart von Säure umgesetzt wird, wobei der entstandene Alkohol zumindest zum Teil abdestilliert wird,

in einer 2. Stufe
die in der 1. Stufe erhaltene homogene Reaktionsmasse in Anwesenheit von Base sowie mindestens einer solchen Menge an endständig ungesättigtem aliphatischen Kohlenwasserstoff, die zur Erhaltung einer homogenen Reaktionsmasse ausreicht, umgesetzt wird und Wasser sowie Alkohol destillativ entfernt werden,

in einer 3. Stufe
die in der 2. Stufe erhaltene homogene Reaktionsmasse mit Säure neutralisiert wird, gegebenenfalls endständig ungesättigter aliphatischer Kohlenwasserstoff teilweise sowie gegebenenfalls noch vorhandenes Wasser und Alkohol vollständig abdestilliert werden und das aus der Neutralisation entstandene, ausgefallene Salz entfernt wird sowie

gegebenenfalls in einer 4. Stufe
die in der 3. Stufe erhaltene homogene Reaktionsmasse teilweise von endständig ungesättigtem aliphatischen Kohlenwasserstoff befreit wird.

**3.** Verfahren nach Anspruch 2, dadurch gekennzeichnet, daß als endständig ungesättigte aliphatische Kohlenwasserstoffe 1-Alkene mit 10 bis 18 Kohlenstoffatomen eingesetzt werden.

**4.** Verfahren nach Anspruch 2 oder 3, dadurch gekennzeichnet, daß Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe
mit Wasser und 100 bis 500 ppm HCl, bezogen auf das Gesamtgewicht der Reaktionsmasse der 1. Stufe vor der Destillation, vermischt wird, bei der Siedetemperatur der Reaktionsmasse und einem Druck zwischen 900 und 1100 hPa umgesetzt wird und ca. 70 Gewichtsprozent des entstandenen Ethanols, bezogen auf die Gesamtmenge des entstandenen Ethanols, abdestilliert werden,
in einer 2. Stufe
die in der 1. Stufe erhaltene homogene Reaktionsmasse in Anwesenheit von Base, ausgewählt aus Natriumhydroxid, Kaliumhydroxid und Methylamin, und 1-Alken mit 10 bis 18 Kohlenstoffatomen bei der Siedetemperatur der Reaktionsmasse und einem Druck zwischen 900 und 1100 hPa umgesetzt wird, wobei Wasser sowie Ethanol vollständig bzw. nahezu vollständig abdestilliert wird,
in einer 3. Stufe
die in der 2. Stufe erhaltene homogene Reaktionsmasse mit HCl neutralisiert wird, Wasser und gegebenenfalls Ethanol vollständig und gegebenenfalls 1-Alken teilweise abdestilliert werden und das bei der Neutralisation entstandene, ausgefallene Salz abfiltriert wird sowie
gegebenenfalls in einer 4. Stufe
die in der 3. Stufe erhaltene Reaktionsmasse teilweise von endständig ungesättigtem aliphatischen Kohlenwasserstoff durch Destillation befreit wird.

**5.** Vernetzbare Organopolysiloxanzusammensetzungen, die

(A) Organopolysiloxan mit SiC-gebundenen organischen Resten mit endständiger aliphatischer Kohlenstoff-Kohlenstoff-Doppelbindung,
(B) Si-gebundenen Wasserstoff aufweisendes organopolysiloxan,
(C) Organopolysiloxanharzlösung gemäß Anspruch 1 oder hergestellt nach einem oder mehreren der Ansprüche 2 bis 4,
(D) Metallkomplex oder Metallverbindung der 8. Nebengruppe
sowie gegebenenfalls
(E) die Anlagerung von Si-gebundenem Wasserstoff an aliphatische Doppelbindung verzögernde Verbindung enthalten.

**6.** Trennadditive enthaltend Organopolysiloxanharzlösung (C) gemäß Anspruch 1 oder hergestellt nach einem oder mehreren der Ansprüche 2 bis 4, die Anlagerung von Si-gebundenem Wasserstoff an aliphatische Doppelbindung

verzögernde Verbindung (E) sowie gegebenenfalls Organopolysiloxan, ausgewählt aus Organopolysiloxan mit SiC-gebundenen organischen Resten mit endständiger aliphatischer Kohlenstoff-Kohlenstoff-Doppelbindung und Si-gebundenen Wasserstoff aufweisendes Organopolysiloxan.

## Claims

1. Organopolysiloxane resin solution which comprises 1-alkenes having 10 to 14 carbon atoms and is free from hydrocarbons other than 1-alkenes having 10 to 14 carbon atoms.

2. Process for the preparation of an organopolysiloxane resin solution which is free from aromatic hydrocarbons, characterized in that

in a 1st stage
at least one silane of the formula

$$R_3SiOR^1 \qquad (I)$$

and/or its hydrolysate $R_3SiOSiR_3$, where

R may in each case be identical or different and is a monovalent organic radical and
$R^1$ is an alkyl radical,

and at least one silane of the formula

$$Si(OR^2)_4 \qquad (II)$$

and/or its partial hydrolysate, where

$R^2$ may in each case be identical or different and is an alkyl radical,

and, if desired, organosilicon compound selected from the group consisting of silanes of the formula

$$R^3{}_aSi(OR^4)_{4-a} \qquad (III)$$

and/or partial hydrolysates thereof, where

a is 1 or 2,
$R^3$ may in each case be identical or different and is a monovalent organic radical, and
$R^4$ may in each case be identical or different and is an alkyl radical, and

organopolysiloxanes of the formula

$$(R^5{}_2SiO)_b \qquad (IV),$$

where

$R^5$ may in each case be identical or different and is a monovalent organic radical and
b is an integer from 3 to 8, and mixtures thereof,

is reacted with water in the presence of acid, with at least some of the alcohol formed being removed by distillation,

in a 2nd stage
the homogeneous reaction mass obtained in the 1st stage is reacted in the presence of base and of a quantity of terminally unsaturated aliphatic hydrocarbon which is at least sufficient to obtain a homogeneous reaction mass, and water and alcohol are removed by distillation,

in a 3rd stage
the homogeneous reaction mass obtained in the 2nd stage is neutralized with acid, any terminally unsaturated aliphatic hydrocarbon is partially distilled off and any water which is still present and alcohol are completely distilled off, and the precipitated salt arising from the neutralization is removed, and

if desired, in a 4th stage,
the homogeneous reaction mass obtained in the 3rd stage is partially freed from terminally unsaturated aliphatic hydrocarbon.

**3.** Process according to Claim 2, characterized in that the terminally unsaturated aliphatic hydrocarbons employed are 1-alkenes having 10 to 18 carbon atoms.

**4.** Process according to Claim 2 or 3, characterized in that hexamethyldisiloxane and/or trimethylethoxysilane, if desired in a mixture with 1,3-divinyltetramethyldisiloxane and/or vinyldimethylethoxysilane and tetraethoxysilane and/or its partial hydrolysate

in a 1st stage
is mixed with water and from 100 to 500 ppm of HCl, based on the overall weight of the reaction mass from the 1st stage prior to distillation, the components are reacted at the boiling temperature of the reaction mass and at a pressure of between 900 and 1100 hPa, and about 70 per cent by weight of the ethanol produced, based on the total quantity of ethanol produced, is distilled off,
in a 2nd stage
the homogeneous reaction mass obtained in the 1st stage is reacted in the presence of base selected from sodium hydroxide, potassium hydroxide and methylamine, and 1-alkene having 10 to 18 carbon atoms, at the boiling temperature of the reaction mass and at a pressure of between 900 and 1100 hPa, with water and ethanol being distilled off completely or almost completely,
in a 3rd stage
the homogeneous reaction mass obtained in the 2nd stage is neutralized with HCl, water and any ethanol are distilled off completely, and any 1-alkene is distilled off partially, and the precipitated salt formed in the neutralization is filtered off, and,
if desired, in a 4th stage
the reaction mass obtained in the 3rd stage is freed from some terminally unsaturated aliphatic hydrocarbon by distillation.

**5.** Crosslinkable organopolysiloxane composition which comprises

A) organopolysiloxane with SiC-bonded organic radicals containing terminal aliphatic carbon-carbon double bond,
(B) organopolysiloxane containing Si-bonded hydrogen,
(C) organopolysiloxane resin solution according to Claim 1 or prepared according to one or more of Claims 2 to 4,
(D) metal complex or metal compound of subgroup 8
and, if desired,
(E) compound which delays the addition of Si-bonded hydrogen onto aliphatic double bond.

**6.** Release additive comprising organopolysiloxane resin solution (C) according to Claim 1 or prepared according to one or more of Claims 2 to 4, compound (E) which delays the addition of Si-bonded hydrogen onto aliphatic double bond and, if desired, organopolysiloxane selected from organopolysiloxane with SiC-bonded organic radicals containing terminal aliphatic carbon-carbon double bond and organopolysiloxane containing Si-bonded hydrogen.

## Revendications

1. Solutions de résine d'organopolysiloxane, contenant des 1-alcènes avec 10 à 14 atomes de carbone, et ne contenant pas des hydrocarbures autres que des 1-alcènes avec 10 à 14 atomes de carbone.

2. Procédé de préparation de solutions de résine d'organopolysiloxane, ne contenant pas d'hydrocarbures aromatiques, caractérisé en ce que :

dans une première étape :
au moins un silane de formule

$$R_3SiOR^1 \quad (I)$$

et/ou son hydrolysat $R_3SiOSiR_3$, où :

R peut être identique ou différent, et représente un radical organique monovalent, et
$R^1$ représente un radical alcoyle,
et au moins un silane de formule

$$Si(OR^2)_4 \quad (II)$$

et/ou son hydrolysat partiel, où :
$R^2$ peut être identique ou différent, et représente un radical alcoyle,
ainsi que, le cas échéant, un composé organique du silicium, choisi dans le groupe comprenant des silanes de formule

$$R^3{}_aSi(OR^4)_{4-a} \quad (III)$$

et/ou leurs hydrolysats partiels, où :

a est 1 ou 2,
$R^3$ peut être identique ou différent, et représente un radical organique monovalent, et
$R^4$ peut être identique ou différent, et représente un radical alcoyle, et

des organopolysiloxanes de formule

$$(R^5{}_2SiO)_b \quad (IV)$$

où :

$R^5$ peut être identique ou différent, et représente un radical organique monovalent, et
b est un nombre entier valant de 3 à 8,

ainsi que leurs mélanges,
sont mis à réagir avec de l'eau, en présence d'acide, l'alcool formé étant au moins en partie éliminé par distillation,
dans une deuxième étape :
la masse de réaction homogène, obtenue dans la première étape est mise à réagir, en présence d'une base, ainsi que d'au moins une quantité d'hydrocarbure aliphatique, insaturé en fin de chaîne, suffisante pour obtenir une masse réactionnelle homogène, et l'eau ainsi que l'alcool sont éliminés par distillation,
dans une troisième étape :
la masse de réaction homogène, obtenue dans la deuxième étape est neutralisée avec un acide, l'hydrocarbure aliphatique insaturé en fin de chaîne est, le cas échéant, partiellement éliminé par distillation et,

le cas échéant, l'eau et l'alcool encore présents sont totalement éliminés par distillation, et le sel précipité, formé lors de la neutralisation, est éliminé, et

dans une quatrième étape, le cas échéant,

la masse de réaction homogène obtenue dans la troisième étape est partiellement débarrassée de l'hydrocarbure aliphatique insaturé en fin de chaîne.

**3.** Procédé suivant la revendication 2, caractérisé en ce que l'on introduit comme hydrocarbures aliphatiques insaturés en fin de chaîne, des 1-alcènes avec 10 à 18 atomes de carbone.

**4.** Procédé suivant l'une quelconque des revendications 2 ou 3, caractérisé en ce que de l'hexaméthyldisiloxane et/ou du triméthyléthoxysilane, éventuellement mélangés à du 1,3-divinyltétraméthyldisiloxane et/ou du vinyldiméthyléthoxysilane et du tétraéthoxysilane et/ou leurs hydrolysats partiels :

dans une première étape :

sont mélangés avec de l'eau et avec 100 à 500 ppm de HCl, sur base du poids total de la masse réactionnelle de la première étape avant la distillation, sont mis à réagir, à la température d'ébullition de la masse réactionnelle et sous une pression entre 900 et 1100 hPa, et environ 70% en poids de l'éthanol formé, sur base de la quantité totale de l'éthanol formé, sont éliminés par distillation,

dans une deuxième étape :

la masse de réaction homogène obtenue dans la première étape est mise à réagir, en présence d'une base, choisie entre l'hydroxyde de sodium, l'hydroxyde de potassium et la méthylamine, et d'un 1-alcène avec 10 à 18 atomes de carbone, à la température d'ébullition de la masse réactionnelle et sous une pression entre 900 et 1100 hPa, et l'eau ainsi que l'éthanol sont complètement ou presque complètement éliminés par distillation,

dans une troisième étape :

la masse de réaction homogène obtenue dans la deuxième étape est neutralisée par de l'HCl, l'eau et, le cas échéant, l'éthanol sont complètement, et le cas échéant les 1-alcènes partiellement, éliminés par distillation, et le sel précipité, formé lors de la neutralisation, est filtré, et

dans une quatrième étape, le cas échéant :

la masse de réaction obtenue dans la troisième étape est partiellement débarrassée, par distillation, de l'hydrocarbure aliphatique insaturé en fin de chaîne.

**5.** Compositions réticulables d'organopolysiloxanes, comprenant :

(A) un organopolysiloxane avec des radicaux organiques à liaisons Si-C, avec des doubles liaisons carbone-carbone aliphatiques en fin de chaînes,
(B) un organopolysiloxane présentant un hydrogène lié au silicium,
(C) une solution de résine d'organopolysiloxane, suivant la revendication 1, ou préparée suivant l'une ou plusieurs des revendications 2 à 4,
(D) un complexe métallique ou un composé métallique du sous-groupe 8, ainsi que, le cas échéant,
(E) un composé retardant l'addition d'hydrogène lié au Si sur une double liaison aliphatique.

**6.** Additif de séparation, contenant une solution de résine d'organopolysiloxane (C) suivant la revendication 1 ou préparée suivant l'une ou plusieurs des revendications 2 à 4, un composé (E) retardant l'addition d'hydrogène lié au Si sur une double liaison aliphatique, ainsi que, le cas échéant, un organopolysiloxane, choisi parmi les organopolysiloxanes avec des radicaux organiques à liaisons Si-C, avec des doubles liaisons carbone-carbone aliphatiques en fin de chaînes, et les organopolysiloxanes présentant un hydrogène lié au Si.